(19) **Europäisches Patentamt / European Patent Office / Office européen des brevets**

(11) **EP 3 942 478 B1**

(12) # FASCICULE DE BREVET EUROPÉEN

(45) Date de publication et mention de la délivrance du brevet:
**04.03.2026 Bulletin 2026/10**

(21) Numéro de dépôt: **20727834.2**

(22) Date de dépôt: **21.04.2020**

(51) Classification Internationale des Brevets (IPC):
**G06N 3/0464** (2023.01)     **G06N 3/088** (2023.01)
**G06F 21/62** (2013.01)     **H04L 9/30** (2006.01)
**H04L 9/00** (2022.01)     **G06N 3/0455** (2023.01)

(52) Classification Coopérative des Brevets (CPC):
**G06N 3/088; G06F 21/6254; G06N 3/0455; G06N 3/0464; H04L 9/008;** H04L 2209/42

(86) Numéro de dépôt international:
**PCT/FR2020/000144**

(87) Numéro de publication internationale:
**WO 2020/217005 (29.10.2020 Gazette 2020/44)**

(54) **MÉTHODE ET SYSTÈME DE CLASSIFICATION CONFIDENTIELLE DE DONNÉES**

VERFAHREN UND SYSTEM ZUR VERTRAULICHEN KLASSIFIZIERUNG VON DATEN

METHOD AND SYSTEM FOR CONFIDENTIAL CLASSIFICATION OF DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.04.2019 FR 1904280**

(43) Date de publication de la demande:
**26.01.2022 Bulletin 2022/04**

(73) Titulaire: **Commissariat à l'Energie Atomique et aux Energies Alternatives**
**75015 Paris (FR)**

(72) Inventeurs:
• **SIRDEY, Renaud**
**78720 Cernay-la-Ville (FR)**
• **CARPOV, Sergiu**
**91300 Massy (FR)**

(74) Mandataire: **Santarelli**
**Tour Trinity**
**1 bis Place de la Défense**
**92400 Courbevoie (FR)**

(56) Documents cités:
**WO-A1-2018/104686     US-A1- 2018 336 463**

• **RAPHAEL BOST ET AL: "Machine Learning Classification over Encrypted Data", IACR, INTERNATIONAL ASSOCIATION FOR CRYPTOLOGIC RESEARCH, vol. 20150112:190551, 12 January 2015 (2015-01-12), pages 1 - 34, XP061017629, DOI: 10.14722/ NDSS.2015.23241**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE**

La présente invention concerne le domaine de l'intelligence artificielle et plus particulièrement celui de l'apprentissage profond par réseau neuronal artificiel. Elle s'applique au domaine de la classification confidentielle de données, en particulier à celui de la reconnaissance faciale et à celui de la reconnaissance de locuteur.

**ÉTAT DE LA TECHNIQUE ANTÉRIEURE**

L'apprentissage automatique (*machine learning*) comme service ou MLAS (Machine Learning As a Service) est actuellement en plein développement. De manière générale, dans un tel contexte, un programme d'intelligence artificielle hébergé par une plateforme est entrainé sur un corpus de données (de manière supervisée ou non) lors d'une phase d'apprentissage. Dans une phase opérationnelle, un utilisateur peut ensuite fournir des données à la plateforme informatique dans un but de classification ou de prédiction.

Un exemple de service de classification de données accessible par le Cloud est constitué par le système de reconnaissance faciale FaceNet. Celui-ci accepte en entrée les pixels d'une photo et fournit en sortie, soit l'identifiant d'un visage connu, soit un vecteur de probabilités indiquant, pour chaque visage d'un ensemble de visages connus, la probabilité que la photo d'entrée corresponde à ce visage. Le système FaceNet utilise un réseau convolutif profond de neurones particulièrement complexe et dont l'apprentissage nécessite un savoir-faire et un temps de calcul importants.

On trouvera une description du système de reconnaissance faciale FaceNet dans l'article de F. Schroff et al. intitulé « FaceNet a unified embedding for face recognition and clustering » publié dans Proc. of IEEE CVPR, pp. 815-823, 2015.

Dans sa phase opérationnelle, le système FaceNet peut être amené à reconnaitre de visages qui n'étaient pas présents dans la base de données d'apprentissage. Pour des raisons évidentes de maintenabilité du système, il n'est pas possible de faire effectuer au système un nouvel apprentissage complet lorsqu'un ou plusieurs nouveaux visages doivent être reconnus par le système. Afin de remédier à cette difficulté, le système FaceNet comprend deux modules en cascade : un premier module générique d'analyse de photos de visages, indépendant des visages à reconnaitre, et un second module de classification, spécifique aux visages à reconnaître, beaucoup plus simple que le premier et adapté à reconnaître un visage sur la base des résultats d'analyse fournis par le premier module. Le module d'analyse est constitué par un réseau profond de neurones dont l'apprentissage est réalisé sur une base de données de visages humains de grande taille. Il permet de réduire la dimensionalité du vecteur d'entrée en le projetant sur un espace de plus faible dimension (*embedding*), formé par des caractéristiques de visages, et sur lequel est définie une métrique de similarité. Le second module effectue la classification à proprement parler du visage à reconnaître sur la base d'un algorithme du type plus proche voisin ou k-plus proches voisins en utilisant cette métrique. L'identifiant de la classe dans laquelle est classée la photo du visage permet à l'utilisateur de reconnaître ce dernier.

Le système FaceNet ne garantit toutefois pas la confidentialité des visages recherchés par les utilisateurs ni celle du résultat de la recherche.

Différentes solutions ont été proposées dans l'état de la technique pour assurer cette confidentialité. Par exemple, un utilisateur peut recourir à des techniques de bruitage des données de référence qu'il transmet à la plateforme. Toutefois, ce bruitage peut conduire à une dégradation des performances de reconnaissance faciale.

Même lorsque les données d'entrée ne sont pas confidentielles, il arrive fréquemment que le résultat de la classification doive rester confidentiel, voire que l'ensemble des classes utilisées pour cette classification doive lui-même rester confidentiel.

Il a été proposé dans l'article de F. Bourse et al. intitulé « Fast homomorphic evaluation of deep discretized neural networks » publié dans la revue CRYPTO (3) 2018, pp. 483-512 un système d'évaluation confidentielle par réseau de neurones profond fondé sur un chiffrement homomorphe. Les données sont alors fournies au classifieur de manière chiffrée et celui-ci en effectue la classification dans le domaine homomorphe. Le résultat de la classification est obtenu dans le domaine homomorphe. Un tel réseau de neurones est toutefois particulièrement complexe en termes de calcul. Il n'est pas non plus pertinent lorsqu'il s'agit simplement de classer des données non confidentielles.

L'objet de la présente invention est par conséquent de proposer une méthode de classification confidentielle de données non confidentielles dans un ensemble de classes confidentiel.

**EXPOSÉ DE L'INVENTION**

La présente invention est définie par les revendications.

**BRÈVE DESCRIPTION DES DESSINS**

D'autres caractéristiques et avantages de l'invention apparaîtront à la lecture d'un mode de réalisation préférentiel de l'invention, décrit en référence aux figures jointes parmi lesquelles :

La Fig. 1 représente de manière schématique un système de classification confidentielle de données selon un premier mode de réalisation de l'invention ;
La Fig. 2 représente l'organigramme d'une méthode de classification confidentielle de données selon un premier mode de réalisation de l'invention ;
La Fig. 3 représente de manière schématique un système de classification confidentielle de données selon un second mode de réalisation de l'invention ;
La Fig. 4 représente l'organigramme d'une méthode de classification confidentielle de données selon un second mode de réalisation de l'invention .

**EXPOSÉ DÉTAILLÉ DE MODES DE RÉALISATION PARTICULIERS**

Nous considérerons dans la suite un système de classification confidentielle de données. Sans perte de généralité, nous nous référerons à une application de reconnaissance faciale opérant sur des données d'image. L'homme du métier comprendra toutefois que ce système peut s'appliquer à la classification confidentielle d'autres types de données telles que des données de parole pour une reconnaissance de locuteur ou bien encore des mesures de trafic dans un réseau informatique pour une reconnaissance d'un type de cyberattaque ou d'anomalie.

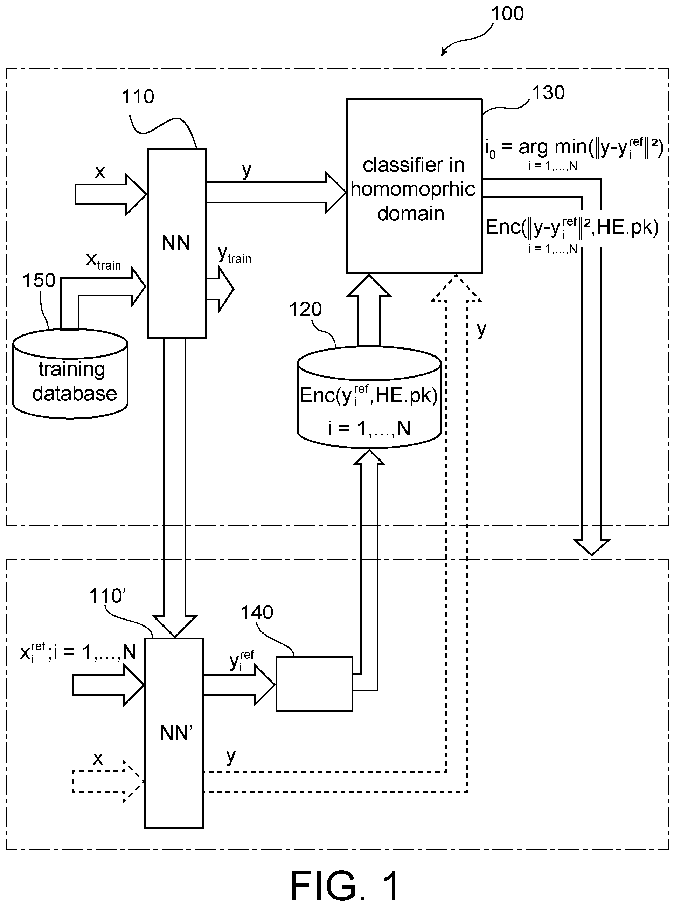

La Fig. 1 représente de manière schématique un système de classification confidentielle de données selon un premier mode de réalisation de l'invention.

Le système de classification confidentielle, 100, encore dénommée plateforme de classification confidentielle, comprend tout d'abord un réseau neuronal artificiel, 110, destiné à apprendre, dans une phase d'apprentissage, des caractéristiques discriminantes à partir de des données d'entrée.

Les données d'entrée peuvent, le cas échéant, avoir été prétraitées dans un module de prétraitement (non représenté) avant d'être fournies au réseau neuronal artificiel. Des exemples d'un tel prétraitement sont une transformée de Fourier spatiale ou temporelle selon le cas, une transformée en ondelettes, une décomposition dans une base orthogonale *ad hoc* etc.

En tout état de cause, on supposera que les données d'entrée, que ce soit des données brutes ou des données prétraitées forment un vecteur $\mathbf{x}$ dans un espace de dimension $n$, $\mathbf{x} \in \mathbb{R}^n$. Par exemple, dans le cas de données d'image, $n$ peut être un nombre de pixels ou un nombre de composantes spectrales.

Le réseau neuronal artificiel est adapté à fournir une représentation compressée des données d'entrée sous la forme de caractéristiques discriminantes, $\mathbf{y} \in \mathbb{R}^m$, appartenant à un espace de dimension réduite $m < n$. Le réseau neuronal artificiel pourra notamment être un auto-encodeur comprenant une ou plusieurs couches cachées. Cet auto-encodeur est entraîné de manière non supervisée sur une base de données d'apprentissage, 150, en l'occurrence une base de données d'images dans le cas d'un système de reconnaissance faciale. Dans le cas d'une base de données d'images, le réseau neuronal artificiel pourra être un réseau neuronal convolutif.

La fonction de compression (ou de projection), $f$ des données d'entrée sur l'espace des caractéristiques discriminantes est telle que si deux vecteurs de données d'entrée, $\mathbf{x}_1, \mathbf{x}_2$ sont proches au sens d'une certaine relation de proximité dans $\mathbb{R}^n$, les vecteurs correspondants de caractéristiques discriminantes, $f(\mathbf{x}_1)$, $f(\mathbf{x}_2)$ sont également proches au sens d'une norme dans $\mathbb{R}^m$. Autrement dit, si deux images de la base de données d'apprentissage 150 sont similaires leurs représentations compressées dans l'espace caractéristique seront « proches » au sens d'une certaine métrique issue d'une norme de $\mathbb{R}^m$.

Une fois le réseau neuronal artificiel entraîné sur les vecteurs $\mathbf{x}_{train}$ de la base de données d'apprentissage, autrement dit une fois celui-ci initialisé, le réseau est défini par une matrice de poids synaptiques (fichier numpy de Python par exemple).

L'utilisateur importe de la plateforme la matrice des poids synaptiques et construit un réseau de neurones local, 110', de mêmes poids synaptiques que celui-entraîné sur la plateforme.

L'utilisateur fournit ensuite des données de référence au réseau de neurones local. Ces données de référence sont des données qu'il s'agira ultérieurement de reconnaître. Par exemple, les données de référence peuvent être des images d'individus qu'il s'agira ensuite identifier. Il est important de noter que ces données de référence ne sont généralement pas présentes dans la base de données d'apprentissage. Les vecteurs de données de référence seront notés dans la suite, $\mathbf{x}_1^{ref}, \ldots, \mathbf{x}_N^{ref}$ .

L'utilisateur obtient ainsi, en sortie du réseau de neurones local, des vecteurs de caractéristiques discriminantes correspondant à ces vecteurs de données de référence, $\mathbf{y}_1^{ref} = f\left(\mathbf{x}_1^{ref}\right), \ldots, \mathbf{y}_N^{ref} = f\left(\mathbf{x}_N^{ref}\right)$ Ces vecteurs seront dénommés dans la suite vecteurs de caractéristiques de référence.

Supposons maintenant que l'utilisateur souhaite faire classer une image inconnue représentée par un vecteur de données d'entrée, **x**. Ce vecteur est évalué par le réseau neuronal local 110', qui fournit un vecteur de caractéristiques discriminantes **y** = $f(\mathbf{x})$. Les distances séparant le vecteur **y** ainsi obtenu et les vecteurs de caractéristiques de référence, $\mathbf{y}_i^{ref}$, $i = 1,...,N$ permettent de classifier le vecteur de données d'entrée, **x.**

Selon une première variante, la classification peut être effectuée en recherchant le plus proche voisin, c'est-à-dire le vecteur de caractéristiques de référence réalisant la plus faible distance au vecteur de caractéristiques discriminantes **y** :

$$i_0 = \arg\min_{i=1,...,N}\left(\left\|\mathbf{y} - \mathbf{y}_i^{ref}\right\|^2\right) = F(\mathbf{y}) \tag{1}$$

En d'autres termes, le vecteur de données de référence $\mathbf{x}_{i_0}^{ref}$ est reconnu dans le vecteur de données d'entrée **x.**

Alternativement, le classifieur peut calculer les probabilités que chaque vecteur de données de référence soit reconnu dans le vecteur de données d'entrée :

$$p_i = \frac{\left\|\mathbf{y} - \mathbf{y}_i^{ref}\right\|}{\sum_{k=1}^{N}\left\|\mathbf{y} - \mathbf{y}_k^{ref}\right\|} \tag{2}$$

Selon une seconde variante, plusieurs vecteurs de données de référence, $\mathbf{x}_{i,1}^{ref},...,\mathbf{x}_{i,M}^{ref}$ peuvent être associés à un même identifiant $i$. Ce sera le cas notamment lorsque $M$ différentes images du visage d'un même individu sont évaluées par le réseau neuronal artificiel et les $M$ vecteurs de caractéristiques de référence correspondants sont disponibles. On peut alors effectuer une classification du type k -plus proches voisins pour déterminer l'identifiant.

Le but de l'invention, à savoir la classification confidentielle sur un ensemble de classes confidentiel est atteint en ce que le classifieur 130 de la plateforme opère dans le domaine homomorphe. Plus précisément, les vecteurs de caractéristiques discriminantes sont chiffrés au moyen d'un chiffrement homomorphe et la recherche du plus proche voisin est réalisée dans le domaine homomorphe.

On suppose que l'utilisateur dispose d'un cryptosystème homomorphe, composé d'une clé privée, *HE.sk,* et d'une clé publique, *HE.pk.*

Les vecteurs de caractéristiques de référence $\mathbf{y}_i^{ref}$, $i = 1,...,N$, obtenus au moyen du réseau neuronal local, sont chiffrés par l'utilisateur à l'aide de sa clé publique, puis transmis à la plateforme 100, qui les stocke dans la base de référence, 120.. On note $Enc\left(\mathbf{y}_i^{ref}, HE.pk\right)$, $i = 1,...,N$ les vecteurs de caractéristiques de référence ainsi chiffrés. Plus précisément, $Enc\left(\mathbf{y}_i^{ref}, HE.pk\right) = \left(Enc\left(y_{i,1}^{ref}, HE.pk\right),..., Enc\left(y_{i,1}^{ref}, HE.pk\right)\right)$ est le vecteur dont les composantes sont les chiffrés des composantes de $\mathbf{y}_i^{ref}$. De la même façon, l'utilisateur chiffre les normes de ces vecteurs à l'aide sa clé publique, $Enc\left(\left\|\mathbf{y}_i^{ref}\right\|^2, HE.pk\right)$, $i = 1,...,N$ et les transmet à la plateforme qui les stocke en relation avec les vecteurs de caractéristiques de référence chiffrés, $Enc\left(\mathbf{y}_i^{ref}, HE.pk\right)$, $i = 1, ...,N$.

Si la base de référence doit être ultérieurement complétée par l'utilisateur, par exemple si un nouveau visage doit être ajouté à ceux à identifier, l'image de ce visage est fournie au réseau neuronal local 110'.L'utilisateur chiffre le vecteur de caractéristiques de référence obtenu, ainsi que sa norme, au moyen de sa clé publique *HE.pk* comme expliqué précédemment. Il transmet le vecteur et la norme chiffrés à la plateforme qui les stocke dans la base de référence.

Selon un mode avantageux de réalisation, le cryptosystème homomorphe est simplement de type additif, c'est-à-dire qu'il vérifie les relations suivantes :

$$Enc(a, HE.pk) \oplus Enc(b, HE.pk) = Enc(a+b, HE.pk) \tag{3-1}$$

et

$$Enc(a, HE.pk) \otimes k = Enc(ka, HE.pk) \qquad (3\text{-}2)$$

où $\oplus$ est une opération d'addition entre chiffrés dans le domaine homomorphe et $\otimes$ est une opération de multiplication externe entre un chiffré et un clair.

On considère ici le scénario selon lequel un utilisateur souhaite classer (ou identifier) un vecteur de données d'entrée **x,** par exemple l'image d'un individu.

Le vecteur de données d'entrée **x** est directement fourni à la plateforme. Les données d'entrée peuvent être par exemple issues d'un flux vidéo directement transmis à la plateforme sans passer par l'utilisateur. Dans ce cas, le réseau neuronal 110 effectue la compression $\mathbf{y} = f(\mathbf{x})$ puis fournit le vecteur **y** au classifieur 130.

Alternativement (variante représentée par les flèches en pointillés en Fig. 1), l'utilisateur a accès au vecteur de données d'entrée en clair et le fournit au réseau neuronal local 110'. Celui-ci le transforme alors sous la forme d'un vecteur de caractéristiques discriminantes, également en clair, $\mathbf{y} = f(\mathbf{x})$ puis transmet le vecteur **y** au classifieur 130.

En tout état de cause, le classifieur peut calculer dans le domaine homomorphe, au moyen des opérations (3-1) et (3-2), les distances euclidiennes entre le vecteur **y** (en clair) et les vecteurs de caractéristiques de référence $\mathbf{y}_i^{ref}$ (chiffrés) :

$$Enc(\|\mathbf{y} - \mathbf{y}_i^{ref}\|^2, HE.pk) = Enc(\|\mathbf{y}\|^2, HE.pk) \oplus Enc(\|\mathbf{y}_i^{ref}\|^2, HE.pk)$$
$$\oplus \left( \underset{m=1,..,M}{\oplus} \left( Enc\left(y_{i,m}^{ref}, HE.pk\right) \otimes y_m \right) \right) \otimes (-2)$$

$$(4)$$

où $\mathbf{y} = (y_1,...,y_M)$ et $\mathbf{y}_i^{ref} = \left( y_{i,1}^{ref},...,y_{i,M}^{ref} \right)$.

Le premier terme est la norme chiffrée en homomorphe du vecteur de caractéristiques discriminantes. Cette norme chiffrée peut être transmise par l'utilisateur. Alternativement, elle peut être aisément calculée par le classifieur s'il dispose du vecteur **y** en clair et de la clé publique *HE.pk* (voire des composantes chiffrées $Enc(y_m, HE.pk)$, la norme chiffrée étant alors obtenue par $\underset{m=1,..,M}{\oplus} \left( Enc\left(y_m, HE.pk\right) \otimes y_m \right)$..

Le second terme est la norme chiffrée en homomorphe du vecteur de caractéristiques de référence d'indice *i,* $Enc(\|\mathbf{y}_i^{ref}\|^2, HE.pk)$ : ce terme est lu de la base de référence où il est stocké en relation avec le chiffré du vecteur de caractéristiques de référence *i,* $Enc\left(\mathbf{y}_i^{ref}, HE.pk\right)$.

Le troisième terme est calculé par le classifieur dans le domaine homomorphe après avoir récupéré de la base de référence les composantes chiffrées $Enc\left(y_{i,m}^{ref}, HE.pk\right)$ stockées en relation avec le chiffré du vecteur de caractéristiques de référence d'indice *i,* $Enc\left(\mathbf{y}_i^{ref}, HE.pk\right)$. On comprendra que la partie entre parenthèses du troisième terme n'est autre que le chiffré du produit scalaire $Enc\left( \sum_{i=1}^{M} y_{i,m}^{ref} y_m ; HE.pk \right)$.

Enfin, la somme des trois termes est obtenue par le classifieur dans le domaine homomorphe.

La comparaison des distances peut être réalisée dans le domaine homomorphe au moyen de circuits booléens pour l'opérateur « > » (plus grand que) sur les représentations binaires des données chiffrées, comme décrit dans l'article de J. Garay et al. intitulé « Practical and secure solutions for integer comparaison », publié dans T. Okamoto and X. Wang editors, Public Key Cryptography - PKC 2007, volume 4450 of Lecture Notes in Computer Science, pages 330-342. Springer Berlin, Heidelberg, 2007.

Enfin, l'indice $i_0$ du vecteur de caractéristiques de référence réalisant le minimum de distance au vecteur **y,** $i_0 = \underset{i=1,..,N}{\arg\min} \left( \|\mathbf{y} - \mathbf{y}_i^{ref}\|^2 \right)$, est transmis à l'utilisateur. Etant donné que la plateforme n'a pas accès aux vecteurs de caractéristiques de référence en clair, le résultat de la classification reste confidentiel vis-à-vis de la plateforme.

Selon une variante, le classifieur peut transmettre les distances euclidiennes sous forme chiffrée à l'utilisateur. Ce dernier déchiffre alors les valeurs de distances au moyen de sa clé privée *HE.sk* et peut soit rechercher l'indice du vecteur réalisant la plus faible distance au vecteur **y** (cf. expression (1)) soit estimer les probabilités que le vecteur **y** tombe dans l'une des *N* classes du classifieur (cf. expression (2)).

Nous avons supposé jusqu'ici que la classification se faisait sur la base de la recherche du plus proche voisin. Toutefois, d'autres fonctions de classification *F* peuvent être envisagées, par exemple une fonction de classification sous la forme d'une fonction linéaire ou d'une fonction polynomiale des données à classifier. La fonction de classification associe une classe à chaque vecteur de données d'entrée. Cette classe peut être définie par un représentant, par exemple un vecteur de données de référence ou, de manière équivalente, le vecteur de caractéristiques de référence obtenu par transformation du précédent au moyen du réseau neuronal artificiel.

A titre d'exemple de fonction linéaire, on peut citer un classifieur par hyperplans et à titre d'exemple de classification polynomiale (quadratique), on peut citer un classifieur gaussien. On utilisera alors de préférence, non plus un cryptosystème homomorphe additif au sens précédent, mais un cryptosystème presque homomorphe ou SHE (*Somewhat Homomorphic Encryption*) voire un cryptosystème entièrement homomorphe ou FHE (*Full Homomorphic Encryption*).

Avantageusement, on utilisera un chiffrement SHE ou FHE permettant d'effectuer des opérations par lots (*batching*). On trouvera par exemple une description d'une telle méthode de chiffrement dans l'article de J-S. Coron et al. intitulé « Batch fully homomorphic encryption of the integers » publié dans Advances in Cryptology - EUROCRYPT 2013, Lecture Notes in Computer Science, vol 7881. Springer, Berlin, Heidelberg.

Le principe d'un traitement par lots est de multiplexer plusieurs clairs pour former un clair composite afin d'obtenir un seul chiffré. Ainsi, au lieu de chiffrer les clairs indépendamment les uns des autres, on chiffre un message composite en clair construit à partir des clairs en question.

Le traitement par lots permet de paralléliser une même opération sur une pluralité de chiffrés dans le domaine homomorphe. Plus précisément, si l'on note $\alpha_1, ..., \alpha_L$ une pluralité de premiers clairs et $(\alpha_1,...,\alpha_L)$ un premier message composite en clair construit par batching à partir de ces premiers clairs et si l'on note $\beta_1,..., \beta_L$ une même pluralité de seconds clairs et $(\beta_1,..., \beta_L)$ un second message composite en clair construit par batching à partir de ces seconds clairs, et si l'on chiffre les premier et second messages composites en question :

$$Enc\left(\alpha_1,...,\alpha_L; HE.pk\right) = \overline{\alpha} \tag{5-1}$$

$$Enc\left(\beta_1,...,\beta_L; HE.pk\right) = \overline{\beta} \tag{5-2}$$

on peut alors effectuer une opération d'addition ou de multiplication en parallèle sur les chiffrés dans le domaine homomorphe en calculant respectivement $\overline{\alpha} \oplus \overline{\beta}$ et $\overline{\alpha}$ e $\overline{\beta}$ (la notation e désigne la loi de multiplication interne), étant donné que :

$$Dec\left(\overline{\alpha} \oplus \overline{\beta}; HE.sk\right) = \left(\alpha_1 + \beta_1,..,\alpha_L + \beta_L\right) \tag{6-1}$$

$$Dec\left(\overline{\alpha} \text{ e } \overline{\beta}; HE.sk\right) = \left(\alpha_1 \times \beta_1,..,\alpha_L \times \beta_L\right) \tag{6-2}$$

De la même façon, on peut effectuer en parallèle une multiplication externe sur des chiffrés en calculant $k \otimes \overline{\alpha}$, étant donné que :

$$Dec\left(k \otimes \overline{\alpha}; HE.sk\right) = \left(k\alpha_1,...,k\alpha_L\right) \tag{7}$$

En outre, certaines méthodes de chiffrement homomorphe, telle que BGV permettent de réaliser une accumulation des clairs constitutifs du clair composite, comme décrit dans l'article original de Z. Brakerski et al. intitulé « Fully homomorphic encryption without bootstrapping » publié dans Cryptology ePrint Archive, Report 2011/277 . Plus précisément, on peut obtenir un second chiffré $\overline{\alpha}'$ à partir du chiffré $\overline{\alpha}$ dont le déchiffrement donne :

$$Dec\left(\overline{\alpha}'; HE.sk\right) = \left(\sum_{1=1}^{L}\alpha_1,...,\sum_{1=1}^{L}\alpha_1\right) \tag{8}$$

Autrement dit, après déchiffrement, on obtient un second message composite dont les éléments constitutifs sont tous égaux à la somme des clairs composant le message composite de départ.

Les propriétés précitées de traitement par lots permettent de calculer en un faible nombre d'opérations les distances euclidiennes dans le domaine homomorphe. En effet, dans ce cas, un seul chiffré homomorphe représente l'ensemble des composantes d'un vecteur de caractéristiques de référence $\mathbf{y}_i^{ref} = \left( y_{i,1}^{ref}, \ldots, y_{i,M}^{ref} \right)$. Le troisième terme de l'expression (4) peut alors être calculé au moyen de deux opérations homomorphes seulement et ce, quelle que soit la dimension $M$ de l'espace caractéristique. Deux additions supplémentaires dans le domaine homomorphe permettent d'achever le calcul dans le domaine homomorphe d'une distance euclidienne. Le calcul des distances euclidiennes est alors particulièrement performant.

Alternativement, le traitement par lots pourra être effectué composante par composante sur l'ensemble des vecteurs de caractéristiques référence. Plus précisément chaque chiffré représente alors l'ensemble des composantes de même rang des différents vecteurs de caractéristiques de référence. Ce traitement par lots est adapté au cas où la fonction de classification est plus complexe que celle d'une recherche du plus proche voisin, notamment lorsqu'elle s'exprime sous la forme d'une fonction polynomiale des données à classifier.

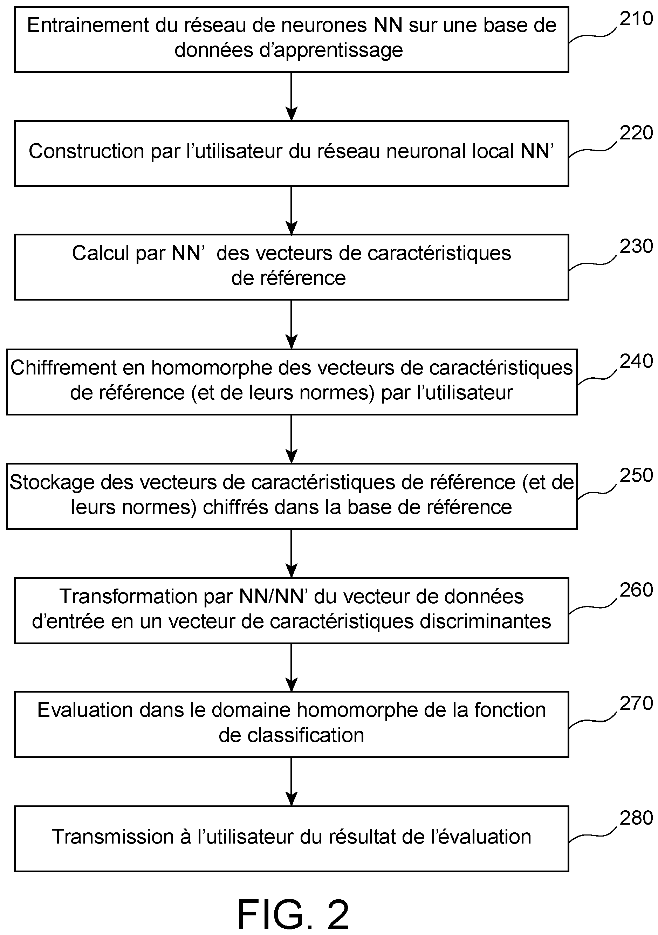

La Fig. 2 représente l'organigramme d'une méthode de classification confidentielle de données selon un mode de réalisation de l'invention.

Cette méthode met en œuvre un réseau neuronal artificiel en cascade avec un classifieur d'une plateforme de classification comme représenté en Fig. 1.

Dans une première phase, dite phase d'apprentissage, le réseau neuronal artificiel, avantageusement un auto-encodeur, est entrainé en 210 sur une base de données d'apprentissage. Ainsi l'auto-encodeur peut être entrainé de manière non supervisée sur des images stockées dans cette base. A l'issue de cette phase d'apprentissage, le réseau neuronal artificiel est capable de représenter les vecteurs de données d'entrée (une image) dans un espace caractéristique de plus faible dimension (*embedding*).

L'utilisateur télécharge ensuite le fichier des coefficients synaptiques du réseau neuronal ainsi entrainé pour construire en 220 un réseau neuronal local, NN', identique à celui de la plateforme.

Une phase opérationnelle succède à cette phase d'apprentissage. Celle-ci comprend une phase d'intialisation du classifieur homomoprhe suivie d'une phase de classification.

Dans la phase d'initialisation, l'utilisateur fournit à la plateforme une pluralité de vecteurs de données de référence (par exemple un ensemble d'images de visages à reconnaître), chiffrés dans le domaine homomorphe.

Ces vecteurs de données de référence sont transformés en 230 par le réseau neuronal local en vecteurs caractéristiques de référence. A l'étape 240, les vecteurs de caractéristiques de référence sont chiffrés en homomorphe par l'utilisateur au moyen de sa clé publique *HE.pk*. De même, les normes de ces vecteurs de caractéristiques de référence sont chiffrées en homomorphe. A l'étape 250, l'utilisateur transmet à la plateforme les vecteurs et les normes correspondantes ainsi chiffrés pour y être stockés dans la base de référence. Il convient de noter que la plateforme est agnostique car elle n'a pas accès aux données de référence en clair (par exemple aux visages à reconnaître).

Dans la phase de classification proprement dite, l'utilisateur peut faire effectuer la classification d'un vecteur de données d'entrée (par exemple des images) par la plateforme. Ce vecteur de données d'entrée est d'abord transformé en 260 par le réseau neuronal NN de la plateforme en un vecteur de caractéristiques discriminantes, qui est ensuite founi au classifieur. Alternativement, comme vu plus haut, le vecteur de données d'entrée peut être transformé par le réseau meuronal local de l'utilisateur puis transmis par ce dernier à la pltaeforme.

Dans tous les cas, le classifieur évalue en 270 la fonction de classification $F$ dans le domaine homomorphe, à partir du vecteur de caractéristiques discriminantes et des vecteurs de caractéristiques de référence stockés sous forme chiffrée dans la base de référence. Il transmet enfin le résultat de l'évaluation à l'utilisateur en 280.

Le résultat de l'évaluation peut être l'indice du vecteur de caractéristiques de référence (et donc l'indice du vecteur de données de référence correspondant) réalisant la plus faible distance avec le vecteur de caractéristiques discriminantes, $\mathbf{y}$. Alternativement, les distances euclidiennes chiffrées en homomorphe, $Enc\left( \left\| \mathbf{y} - \mathbf{y}_i^{ref} \right\|^2, HE.pk \right)$, $i = 1,..,N$ peuvent être transmise à l'utilisateur qui les déchiffre à l'aide de sa clé secrète *HE.pk* et peut déterminer, au moyen de l'expression (2), les probabilités respectives que le vecteur de données d'entrée corresponde aux différents vecteurs de données de référence .

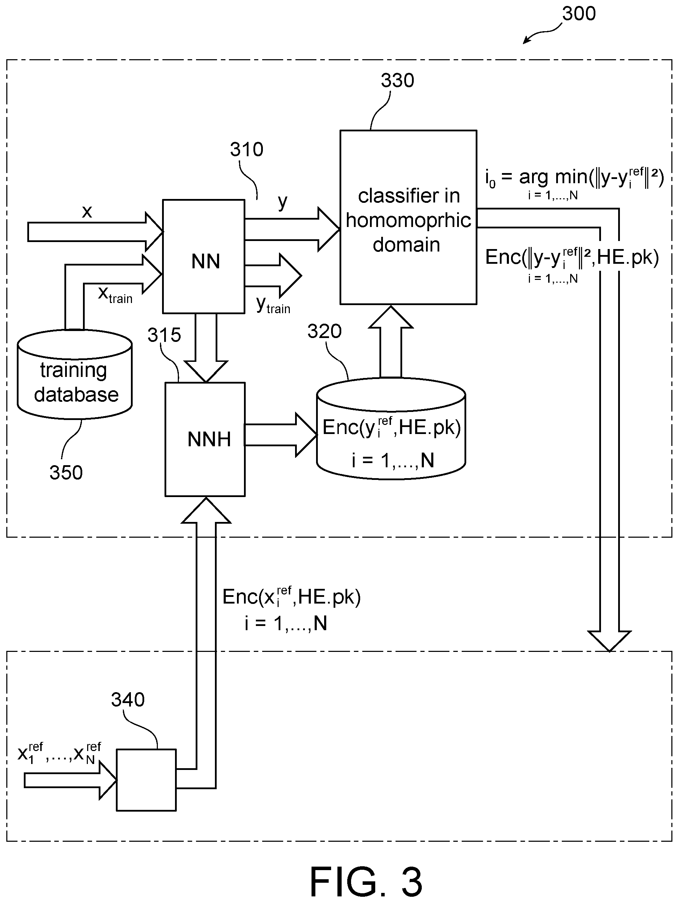

La Fig. 3 représente de manière schématique un système de classification confidentielle de données selon un second mode de réalisation de l'invention.

Comme dans le premier mode de réalisation, la plateforme de classification comporte un réseau neuronal artificiel, 310, en cascade avec un classifieur 330, adapté à opérer dans le domaine homomorphe.

Le réseau neuronal artificiel est entrainé sur des vecteurs de données $\mathbf{x}_{train}$ lus de la base de données d'appprentissage 350. Par ailleurs, la plateforme construit le réseau neuronal équivalent dans le domaine homomorphe, 315, dénommé ci-après NNH

A la différence du premier mode de réalisation, les vecteurs de données de référence, $\mathbf{x}_1^{ref}, \ldots, \mathbf{x}_N^{ref}$, sont chiffrés par l'utilisateur dans le domaine homomorphe et transmis à la plateforme, 300, pour être fournis au réseau neuronal NNH. Plus précisément, le réseau neuronal NNH effectue l'équivalent de la compression $f$ dans le domaine homomorphe, autrement dit il fournit en sortie le chiffré homomorphe du vecteur de caractéristiques de référence, $Enc\left(\mathbf{y}_i^{ref}, HE.pk\right)$ à partir du chiffré homomorphe du vecteur de données de référence, $Enc\left(\mathbf{x}_i^{ref}, HE.pk\right)$. Cette opération de compression dans le domaine homomorphe est réalisée une fois pour toutes, sur l'ensemble de vecteurs de données dé référence $\mathbf{x}_1^{ref},...,\mathbf{x}_N^{ref}$. Les chiffrés homomorphe des vecteurs de caractéristiques de référence, $Enc\left(\mathbf{y}_i^{ref}, HE.pk\right)$, $i = 1,...,N$, sont stockés dans la base de données de référence, 320, le chiffré homomorphe $Enc\left(\mathbf{y}_i^{ref}, HE.pk\right)$ étant représenté par un vecteur de composantes chiffrées $Enc\left(y_{i,m}^{ref}, HE.pk\right)$, $m = 1,..,M$. La norme de chaque vecteur $\mathbf{y}_i^{ref}, i=1,...,N$ en est déduite dans le domaine homomorphe, soit $Enc\left(\left\|\mathbf{y}_i^{ref}\right\|^2, HE.pk\right)$ et est stockée dans la base de référence 320 en relation avec le vecteur $Enc\left(\mathbf{y}_i^{ref}, HE.pk\right)$.

Nous nous plaçons à nouveau dans un scénario où l'utilisateur souhaite classer un vecteur de données d'entrée **x** (par exemple une image d'un flux vidéo pour une reconnaissance faciale). Ce vecteur est généralement fourni directement à la plateforme sans transiter par l'utilisateur. Dans certains cas, cependant, l'utilisateur pourra fournir le vecteurs de données d'entrée.

Le réseau neuronal de la plateforme effectue la compression du vecteur de données d'entrée pour en déduire le vecteur de caractéristiques discriminantes **y** , et le fournir ensuite fourni au classifieur 330. La fonction du classifieur 330 est identique à celle du classifieur 130. En particulier, le classifieur 330 calcule dans le domaine homomorphe les distances respectives entre le vecteur de caractéristiques discriminantes et les différents vecteurs de référence. Il retourne à l'utilisateur l'indice du vecteur de référence correspondant à la plus faible distance ou bien les distances à ces vecteurs, chiffrées dans le domaine homomorphe.

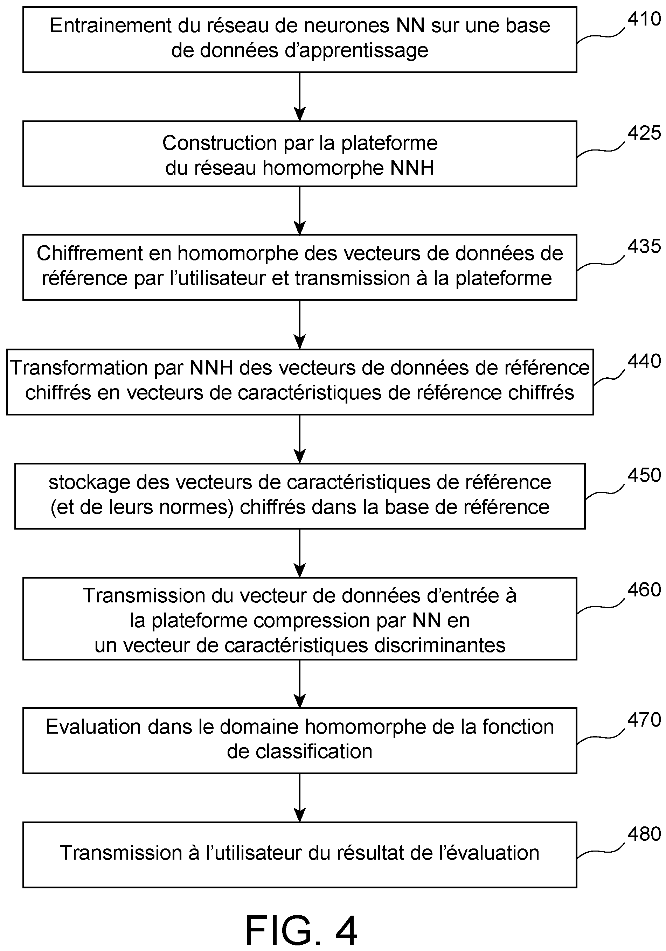

La Fig. 4 représente l'organigramme d'une méthode de classification confidentielle de données selon un second mode de réalisation de l'invention.

A la différence du premier mode de réalisation, la phase d'apprentissage comprend, outre une d'étape d'entrainement, 410, du réseau neuronal NN (identique à l'étape 210 de la Fig. 2), une étape 425 dans laquelle la plateforme construit un réseau neuronal NNH effectuant l'équivalent de la compression $f$ dans le domaine homomorphe.

A cette phase d'apprentissage succède une phase opérationnelle, comprenant une phase d'initialisation 435-450 et une phase de classification 460-480.

A l'étape 435, l'utilisateur chiffre les vecteurs de données de référence, $\mathbf{x}_1^{ref},...,\mathbf{x}_N^{ref}$ puis les transmet à la plateforme.

A l'étape 440, le réseau neuronal NNH effectue la compression des vecteurs de données de référence dans le domaine homomorphe pour obtenir les vecteurs de caractéristiques de référence, chiffrés dans le domaine homomorphe, $Enc\left(\mathbf{y}_i^{ref}, HE.pk\right)$, $i =1,...,N$. Les normes de ces vecteurs sont également calculés dans le domaine homomorphe, $Enc\left(\left\|\mathbf{y}_i^{ref}\right\|^2, HE.pk\right)$, $i = 1,...,N$.

A l'étape 450, ces vecteurs (ainsi que leurs normes) sont stockés dans la base de référence de la plateforme.

La phase de classification comprend les étapes 460-480 comme dans le premier mode de réalisation. L'étape 460 peut différer de l'étape 260 au sens où le vecteur de données d'entrée **x** à classifier est toujours fourni à la plateforme pour être transformé par le réseau neuronal artificiel NN en un vecteur de caractéristiques discriminantes **y**. En d'autres termes, la compression est effectuée ici par le réseau neuronal de la plateforme et jamais par le réseau neuronal local de l'utilisateur.

Les étapes suivantes 470 et 480 sont en revanche respectivement identiques aux étapes 270 et 280 décrites en relation avec la Fig. 2.

Au terme de la phase de classification, la plateforme transmet à l'utilisateur l'indice du vecteur de caractéristiques de référence réalisant la plus faible distance avec le vecteur de caractéristiques discriminantes, **y**, ou bien les distances euclidiennes chiffrées en homomorphe, $Enc(\left\|\mathbf{y} - \mathbf{y}_i^{ref}\right\|^2, HE.pk)$ .

Le second mode de réalisation, qui n'est pas revendiqué, se distingue du premier en ce que le réseau neuronal artificiel n'est pas partagé entre la plateforme et l'utilisateur. Il suppose par conséquent que la plateforme effectue la compression des vecteurs de données de référence dans le domaine homomorphe, ce qui, comme nous l'avons vu en partie introductive, peut être fortement pénalisant en termes de volume de calcul. Toutefois, il est essentiel de noter que, contrairement à l'art antérieur, l'opération du réseau dans le domaine homomorphe n'a lieu ici que dans la phase d'initialisation et non à chaque requête de classification.

## Revendications

1. Plateforme de classification confidentielle de données comprenant un réseau neuronal artificiel (110, 310) en cascade avec un classifieur (130, 230),

   le réseau neuronal artificiel étant adapté à être entrainé pendant une phase d'apprentissage sur des vecteurs de données d'une base de données d'apprentissage (150, 350) et à transformer, dans une phase opérationnelle, des vecteurs de données d'entrée en des vecteurs de caractéristiques discriminantes, lesdits vecteurs de caractéristiques discriminantes étant fournis au classifieur et possédant une taille inférieure à celle des vecteurs de données,
   ladite plateforme de classification comprenant une base de référence (120, 320) dans laquelle sont stockés, lors d'une phase d'initialisation du classifieur, des vecteurs de caractéristiques de référence, obtenus par transformation, au moyen d'une copie (110') du réseau neuronal artificiel (110, 310), de vecteurs de données de référence fournies par un utilisateur, les vecteurs de caractéristiques de référence étant stockés sous forme chiffrée par une clé publique d'un cryptosystème homomorphe dudit utilisateur ; et
   ladite plateforme de classification étant telle que
   après la phase d'initialisation, lorsque l'utilisateur requiert de la plateforme de classification (100, 300) la classification d'un vecteur de données d'entrée ($\mathbf{x}$), le classifieur (130, 330) évalue une fonction de classification dans le domaine homomorphe, à partir du vecteur de caractéristiques discriminantes ($\mathbf{y}$) fourni par le réseau neuronal artificiel (110, 310) ou ladite copie (110') de celui-ci, et des vecteurs de caractéristiques de référence stockés sous forme chiffrée dans la base de référence ( $Enc\left(\mathbf{y}_i^{ref}, HE.pk\right)$ , $i = 1,...,N$), et transmet à l'utilisateur le résultat de ladite évaluation ; que
   l'utilisateur télécharge de la plateforme ladite copie (110') du réseau neuronal artificiel au terme de la phase d'apprentissage ; et que
   ladite copie du réseau neuronal est configurée pour fournir, lors de la phase d'initialisation, les vecteurs de caractéristiques de référence à partir des vecteurs de données de référence, l'utilisateur disposant d'un module de chiffrement homomorphe (140) par ladite clé publique, configuré pour chiffrer en homomorphe lesdits vecteurs de caractéristiques de référence et les transmettre à la plateforme où ils sont stockés dans la base de référence (120).

2. Plateforme de classification confidentielle de données selon la revendication 1, **caractérisée en ce que** le réseau de neurones artificiel est un auto-encodeur.

3. Plateforme de classification confidentielle de données selon la revendication 1, **caractérisée en ce que** le système homomorphe est additif.

4. Plateforme de classification confidentielle de données selon la revendication 1 ou 2, **caractérisée en ce que** le système homomorphe est un système SHE ou FHE.

5. Plateforme de classification confidentielle de données selon l'une des revendications 1 à 4, **caractérisée en ce que** la plateforme comprend en outre un second réseau neuronal artificiel (315) configuré pour effectuer dans le domaine homomorphe une opération de transformation équivalente à celle effectuée par le réseau neuronal artificiel dans le domaine des clairs, l'utilisateur disposant d'un module de chiffrement homomorphe (340) par ladite clé publique configuré pour chiffrer lesdits vecteurs de données de référence et les transmettre à la plateforme où ils sont transformés par le second réseau neuronal (315) en des vecteurs de caractéristiques de référence chiffrés dans le domaine homomorphe avant d'être stockés dans la base de référence (320)

6. Plateforme de classification confidentielle selon l'une quelconque des revendications 1 à 5, **caractérisée en ce que** le classifieur est configuré pour calculer dans le domaine homomorphe, le produit scalaire du vecteur de caractéristiques discriminantes, $\mathbf{y}$, avec les vecteurs de caractéristiques de référence, à partir des composantes en clair ($y_1,..., y_M$) du vecteur de caractéristiques discriminantes, et des composantes chiffrées des vecteurs de caractéristiques de référence, au moyen de $Enc\left(\sum_{i=1}^{M} y_{i,m}^{ref} y_m; HE.pk\right) = \left(\underset{m=1,..,M}{\oplus}\left(Enc\left(y_{i,m}^{ref}, HE.pk\right) \otimes y_m\right)\right)$ où $\oplus$ est l'opération d'addition interne dans le domaine homomorphe et $\otimes$ est l'opération de multiplication externe entre un élément du domaine homomorphe et un clair.

**7.** Plateforme de classification confidentielle selon la revendication 6, **caractérisée en ce que** ledit produit scalaire est calculé au moyen d'un traitement par lots, en regroupant les différentes composantes de chaque vecteur de caractéristiques de référence au sein d'un premier message composite en clair, ledit premier message composite en clair étant ensuite chiffré en homomorphe, pour obtenir un premier message composite chiffré, et en regroupant les différentes composantes du vecteur de caractéristiques discriminantes au sein d'un second message composite en clair, ledit traitement par lots comprenant une multiplication externe du premier message composite chiffré avec le second message composite en clair.

**8.** Plateforme de classification confidentielle de données selon la revendication 6 ou 7, **caractérisée en ce que** l'utilisateur fournit au classifieur la clé publique *HE.pk* de son cryptosystème homomorphe et que celui-ci est en outre configuré pour calculer le chiffré de la norme du vecteur de caractéristiques discriminantes, $Enc(\|\mathbf{y}\|^2.HE.pk)$.

**9.** Plateforme de classification confidentielle de données selon la revendication 8, **caractérisée en ce que** le classifieur est en outre configuré pour calculer, dans le domaine homomorphe, les distances euclidiennes entre le vecteur de caractéristiques discriminantes (**y**) et les vecteurs de caractéristiques de référence ( $\mathbf{y}_i^{ref}$ , $i = 1,..,N$ ), à partir de la norme chiffrée du vecteur de caractéristiques discriminantes, des normes chiffrées des vecteurs de caractéristiques de référence et des produits scalaires respectifs entre le vecteur de caractéristiques discriminantes et les vecteurs de caractéristiques de référence.

**10.** Plateforme de classification confidentielle de données selon la revendication 9, **caractérisée en ce que** le classifieur compare lesdites distances euclidiennes dans le domaine homomorphe et retourne à l'utilisateur l'indice du vecteur de données de référence correspondant à la plus faible distance euclidienne.

**11.** Plateforme de classification confidentielle de données selon la revendication 9, **caractérisée en ce que** le classifieur retourne à l'utilisateur lesdites distances euclidiennes obtenues dans le domaine homomorphe et que l'utilisateur en déduit au moyen de la clé privée de son cryptosystème homomorphe, les probabilités respectives que le vecteur de données d'entrée corresponde aux vecteurs de données de référence.

**12.** Méthode de classification confidentielle de données au moyen d'un réseau neuronal artificiel (110, 310) et un classifieur (130, 330), dans laquelle le réseau neuronal artificiel est entrainé pendant une phase d'apprentissage sur des vecteurs de données d'une base d'apprentissage et que le réseau neuronal artificiel ou une copie de celui-ci transforme, dans une phase opérationnelle, des vecteurs de données d'entrée en des vecteurs de caractéristiques discriminantes, lesdits vecteurs de caractéristiques discriminantes étant fournis au classifieur (130) et possédant une taille inférieure à la celle des vecteurs de données, ladite méthode comprenant :

- le téléchargement, par l'utilisateur de la plateforme, d'une copie (110') du réseau neuronal artificiel au terme de la phase d'apprentissage ;
- l'obtention au moyen de ladite copie du réseau neuronal, lors d'une phase d'initialisation du classifieur, de vecteurs de caractéristiques de référence à partir de vecteurs de données de référence fournies par ledit utilisateur, l'utilisateur disposant d'un module de chiffrement homomorphe (140) par ladite clé publique, configuré pour chiffrer en homomorphe lesdits vecteurs de caractéristiques de référence,
- la transmission desdits vecteurs de caractéristiques de référence à la plateforme,
- lors de la phase d'initialisation du classifieur, le stockage dans une base de référence (120, 320) des vecteurs de caractéristiques de référence, lesdits vecteurs de caractéristiques de référence étant obtenus par transformation, au moyen du réseau neuronal artificiel ou de ladite copie, des vecteurs de données de référence, les vecteurs de caractéristiques de référence étant stockés sous forme chiffrée par une clé publique du cryptosystème homomorphe dudit utilisateur ; et,
- après cette phase d'initialisation, lorsque l'utilisateur requiert de la plateforme de classification la classification d'un vecteur de données d'entrée (**x**), une fonction de classification (*f*) est évaluée par le classifieur dans le domaine homomorphe, à partir du vecteur de caractéristiques discriminantes (**y**) fourni par le réseau neuronal artificiel et des vecteurs de référence stockés sous forme chiffrée dans la base de référence

$$\left( Enc\left( \mathbf{y}_i^{ref}, HE.pk \right) \right.$$ , $i = 1,...,N$), le résultat de ladite évaluation étant transmis à l'utilisateur.

**Patentansprüche**

1. Plattform zur vertraulichen Klassifizierung von Daten, die ein künstliches neuronales Netzwerk (110, 310) in Kaskade mit einem Klassifikator (130, 230) umfasst,

   wobei das künstliche neuronale Netzwerk dazu ausgelegt ist, während einer Lernphase auf Datenvektoren einer Lerndatenbank (150, 350) trainiert zu werden und in einer Betriebsphase Eingangsdatenvektoren in Diskriminierungsmerkmalvektoren umzuwandeln, wobei die Diskriminierungsmerkmalvektoren dem Klassifikator bereitgestellt werden und eine geringere Größe besitzen als die Datenvektoren,
   wobei die Plattform zur Klassifizierung eine Referenzdatenbank (120, 320) umfasst, in der während einer Initialisierungsphase des Klassifikators Referenzmerkmalvektoren gespeichert werden, die durch Umwandlung von Referenzdatenvektoren, die von einem Benutzer bereitgestellt werden, mittels einer Kopie (110') des künstlichen neuronalen Netzwerks (110, 310) erhalten werden, wobei die Referenzmerkmalvektoren in verschlüsselter Form durch einen öffentlichen Schlüssel eines homomorphen Kryptosystems des Benutzers gespeichert werden; und
   wobei die Plattform zur Klassifizierung derart ist, dass
   nach der Initialisierungsphase, wenn der Benutzer von der Plattform zur Klassifizierung (100, 300) die Klassifizierung eines Eingangsdatenvektors (x) anfordert, der Klassifikator (130, 330) eine Klassifizierungsfunktion im homomorphen Bereich anhand des von dem künstlichen neuronalen Netzwerk (110, 310) oder der Kopie (110') desselben bereitgestellten Diskriminierungsmerkmalvektors (**y**) und der in der Referenzdatenbank (
   $$Enc\left( \mathbf{y}_i^{ref}, HE.pk \right)$$ , $i=1,...,N$) in verschlüsselter Form gespeicherten Referenzmerkmalvektoren bewertet
   und dem Benutzer das Ergebnis der Bewertung übermittelt; dass
   der Benutzer die Kopie (110') des künstlichen neuronalen Netzwerks nach Abschluss der Lernphase von der Plattform herunterlädt; und dass
   die Kopie des neuronalen Netzwerks so konfiguriert ist, dass sie während der Initialisierungsphase die Referenzmerkmalvektoren aus den Referenzdatenvektoren bereitstellt, wobei der Benutzer über ein homomorphes Verschlüsselungsmodul (140) durch den öffentlichen Schlüssel verfügt, das so konfiguriert ist, dass es die Referenzmerkmalvektoren homomorph verschlüsselt und an die Plattform übermittelt, auf der sie in der Referenzdatenbank (120) gespeichert sind.

2. Plattform zur vertraulichen Klassifizierung von Daten nach Anspruch 1, **dadurch gekennzeichnet, dass** das künstliche neuronale Netzwerk ein Selbstkodierer ist.

3. Plattform zur vertraulichen Klassifizierung von Daten nach Anspruch 1, **dadurch gekennzeichnet, dass** das homomorphe System additiv ist.

4. Plattform zur vertraulichen Klassifizierung von Daten nach Anspruch 1 oder 2, **dadurch gekennzeichnet, dass** das homomorphe System ein SHE- oder FHE-System ist.

5. Plattform zur vertraulichen Klassifizierung von Daten nach einem der Ansprüche 1 bis 4, **dadurch gekennzeichnet, dass** die Plattform ferner ein zweites künstliches neuronales Netzwerk (315) umfasst, das so konfiguriert ist, dass es in dem homomorphen Bereich einen Umwandlungsvorgang durchführt, der dem durch das künstliche neuronale Netzwerk im Klartextbereich durchgeführten Vorgang entspricht, wobei der Benutzer über ein homomorphes Verschlüsselungsmodul (340) durch den öffentlichen Schlüssel verfügt, das so konfiguriert ist, dass es die Referenzdatenvektoren verschlüsselt und an die Plattform übermittelt, wo sie von dem zweiten neuronalen Netzwerk (315) in Referenzmerkmalvektoren umgewandelt werden, die in dem homomorphen Bereich verschlüsselt sind, bevor sie in der Referenzdatenbank (320) gespeichert werden

6. Plattform zur vertraulichen Klassifizierung nach einem der Ansprüche 1 bis 5, **dadurch gekennzeichnet, dass** der Klassifikator so konfiguriert ist, dass er im homomorphen Bereich das Skalarprodukt des Diskriminierungsmerkmalvektors **y** mit den Vektoren der Referenzmerkmale aus den Klartextkomponenten ($y_1, ..., y_M$) des Diskriminierungsmerkmalvektors und den verschlüsselten Komponenten der Referenzmerkmalvektoren mittels

$$Enc\left(\sum_{i=1}^{M} y_{i,m}^{ref} y_m; HE.pk\right) = \left(\bigoplus_{m=1,..,M}\left(Enc\left(y_{i,m}^{ref}, HE.pk\right) \otimes y_m\right)\right)$$ berechnet, wobei $\oplus$ die interne Additionsoperation im homomorphen Bereich ist und $\otimes$ die externe Multiplikationsoperation zwischen einem Element des homomorphen Bereichs und einem Klartextelement ist.

7. Plattform zur vertraulichen Klassifizierung nach Anspruch 6, **dadurch gekennzeichnet, dass** das Skalarprodukt mittels Batch-Verarbeitung berechnet wird, indem die verschiedenen Komponenten jedes Referenzmerkmalvektors innerhalb einer ersten zusammengesetzten Klartextnachricht zusammengefasst werden, wobei die erste zusammengesetzte Klartextnachricht anschließend homomorph verschlüsselt wird, um eine erste verschlüsselte zusammengesetzte Nachricht zu erhalten, und indem die verschiedenen Komponenten des Diskriminierungsmerkmalvektors innerhalb einer zweiten zusammengesetzten Klartextnachricht zusammengefasst werden, wobei die Stapelverarbeitung eine externe Multiplikation der ersten verschlüsselten zusammengesetzten Nachricht mit der zweiten zusammengesetzten Klartextnachricht umfasst.

8. Plattform zur vertraulichen Klassifizierung von Daten nach Anspruch 6 oder 7, **dadurch gekennzeichnet, dass** der Benutzer dem Klassifikator den öffentlichen Schlüssel *HE.pk* seines homomorphen Kryptosystems bereitstellt und dass dieser ferner so konfiguriert ist, dass er die Verschlüsselung der Norm des Diskriminierungsmerkmalvektors, *Enc,* berechnet($\|\mathbf{y}\|^2$,*HE.pk*).

9. Plattform zur vertraulichen Klassifizierung von Daten nach Anspruch 8, **dadurch gekennzeichnet, dass** der Klassifikator ferner so konfiguriert ist, dass er im homomorphen Bereich die euklidischen Abstände zwischen dem Diskriminierungsmerkmalvektor ($\mathbf{y}$) und den Referenzmerkmalvektoren $\left(\mathbf{y}_i^{ref}, i=1,..,N\right)$ aus der verschlüsselten Norm des Diskriminierungsmerkmalvektors, den verschlüsselten Normen der Referenzmerkmalsvektoren und den jeweiligen Skalarprodukten zwischen dem Diskriminierungsmerkmalvektor und den Referenzmerkmalvektoren berechnet.

10. Plattform zur vertraulichen Klassifizierung von Daten nach Anspruch 9, **dadurch gekennzeichnet, dass** der Klassifikator die euklidischen Abstände im homomorphen Bereich vergleicht und dem Benutzer den Index des Referenzdatenvektors zurückgibt, der dem geringsten euklidischen Abstand entspricht.

11. Plattform zur vertraulichen Klassifizierung von Daten nach Anspruch 9, **dadurch gekennzeichnet, dass** der Klassifikator dem Benutzer die im homomorphen Bereich erhaltenen euklidischen Abstände zurückgibt und der Benutzer daraus mittels des privaten Schlüssels seines homomorphen Kryptosystems die jeweiligen Wahrscheinlichkeiten ableitet, dass der Eingangsdatenvektor den Referenzdatenvektoren entspricht.

12. Verfahren zur vertraulichen Klassifizierung von Daten mittels eines künstlichen neuronalen Netzwerks (110, 310) und eines Klassifikators (130, 330), wobei das künstliche neuronale Netzwerk während einer Lernphase auf Datenvektoren einer Lernbasis trainiert wird und das künstliche neuronale Netzwerk oder eine Kopie davon in einer Betriebsphase Eingangsdatenvektoren in Diskriminierungsmerkmalvektorren umwandelt, wobei die Diskriminierungsmerkmalvektoren dem Klassifikator (130) bereitgestellt werden und eine geringere Größe besitzen als die Datenvektoren, wobei das Verfahren Folgendes umfasst:

    - das Herunterladen einer Kopie (110') des künstlichen neuronalen Netzwerks durch den Benutzer der Plattform an dem Ende der Lernphase;
    - das Erhalten von Referenzmerkmalvektoren aus Referenzdatenvektoren, die von dem Benutzer bereitgestellt werden, mittels der Kopie des neuronalen Netzwerks während einer Initialisierungsphase des Klassifikators, wobei der Benutzer über ein homomorphes Verschlüsselungsmodul (140) durch den öffentlichen Schlüssel verfügt, das so konfiguriert ist, dass es die Referenzmerkmalvektoren homomorph verschlüsselt,
    - das Übermitteln der Referenzmerkmalvektoren an die Plattform,
    - während der Initialisierungsphase des Klassifikators das Speichern der Referenzmerkmalvektoren in einer Referenzdatenbank (120, 320), wobei die Referenzmerkmalvektoren durch Umwandlung der Referenzdatenvektoren mittels des künstlichen neuronalen Netzwerks oder der Kopie erhalten werden, wobei die Referenzmerkmalvektoren in verschlüsselter Form durch einen öffentlichen Schlüssel des homomorphen Kryptosystems des Benutzers gespeichert werden; und
    - nach dieser Initialisierungsphase, wenn der Benutzer von der Plattform zur Klassifizierung die Klassifizierung eines Eingangsdatenvektors ($\mathbf{x}$) anfordert, wird eine Klassifizierungsfunktion ($f$) von dem Klassifikator in dem homomorphen Bereich anhand des von dem künstlichen neuronalen Netzwerk bereitgestellten Diskriminierungsmerkmalvektors (**y**) und der in der Referenzdatenbank in verschlüsselter Form gespeicherten Referenzvektoren bewertet $\left(Enc\left(\mathbf{y}_i^{ref}, HE.pk\right), i=1,...,N\right)$, wobei das Ergebnis der Bewertung an den Nutzer übermittelt wird.

**Claims**

1. A confidential data classification platform comprising an artificial neural network (110, 310) cascaded with a classifier (130, 230),

   the artificial neural network being adapted to be trained during a learning phase on data vectors from a learning database (150, 350) and to transform, in an operational phase, input data vectors into discriminative characteristic vectors, said discriminative characteristic vectors being provided to the classifier and having a size smaller than that of the data vectors,
   said classification platform comprising a reference base (120, 320) in which are stored, during an initialisation phase of the classifier, reference characteristic vectors, obtained by transforming, by means of the artificial neural network (110, 310) or a copy (110') thereof, reference data vectors, the reference characteristic vectors being stored in encrypted form by a public key of a homomorphic cryptosystem of said user; and after the initialisation phase, and
   said classification platform being such that,
   when the user requests the classification platform (100, 300) to classify an input data vector (**x**), the classifier (130, 330) evaluates a classification function in the homomorphic domain, from the discriminative characteristic vector (**y**) provided by the artificial neural network (110, 310) or said copy (110') thereof, and from the reference characteristic vectors stored in encrypted form in the reference base $\left(Enc\left(\mathbf{y}_i^{ref}, HE.pk\right)\right)$, $i = 1,..., N$), and transmits the result of said evaluation to the user; that
   the user downloads from the platform a copy (110') of the artificial neural network at the end of the learning phase, and that
   said copy of the neural network is configured to provide, during the initialisation phase, the reference characteristic vectors from the reference data vectors, the user having a module for homomorphic encryption (140) by said public key, configured to encrypt said reference characteristic vectors and transmit them to the platform where they are stored in the reference base (120).

2. The confidential data classification platform according to claim 1, **characterized in that** the artificial neural network is an auto-encoder.

3. The confidential data classification platform according to claim 1, **characterized in that** the homomorphic system is additive.

4. The confidential data classification platform according to claim 1 or 2, wherein the homomorphic system is a SHE or FHE system.

5. The confidential data classification platform according to one of claims 1 to 4, **characterised in that** the platform further comprises a second artificial neural network (315) configured to perform in the homomorphic domain a transformation operation equivalent to that performed by the artificial neural network in the cleartext domain, the user having a module for homomorphic encryption (340) by said public key configured to encrypt said reference data vectors and transmit them to the platform where they are transformed by the second neural network (315) into reference characteristic vectors encrypted in the homomorphic domain before being stored in the reference base (320).

6. The confidential classification platform according to any of the claims 1 to 5, **characterised in that** the classifier is configured to compute in the homomorphic domain, the scalar product of the discriminative characteristic vector, **y**, with the reference characteristic vectors, from the cleartext components ($y_1,..., y_M$) of the discriminative characteristic vector, and the encrypted components of the reference characteristic vectors, by means of

$$Enc\left(\sum_{i=1}^{M} y_{i,m}^{ref} y_m ; HE.pk\right) = \left(\bigoplus_{m=1,...,M} \left(Enc\left(y_{i,m}^{ref}, HE.pk\right) \otimes y_m\right)\right)$$ where $\oplus$ is the internal addition operation in the homomorphic domain and $\otimes$ is the external multiplication operation between an element of the homomorphic domain and a cleartext.

7. The confidential classification platform according to claim 6, **characterised in that** said scalar product is computed by means of batch processing, by clustering the different components of each reference characteristic vector within a first composite cleartext message, said first composite cleartext message being subsequently homomorphically encrypted, to obtain a first composite encrypted message, and by clustering the different components of the discriminative characteristic vector within a second composite cleartext message, said batch processing comprising an external multiplication of the first composite encrypted message with the second composite cleartext message.

8. The confidential data classification platform according to claim 6 or 7, **characterised in that** the user provides the classifier with the public key $HE.pk$ of his/her homomorphic cryptosystem and the classifier is further configured to compute the ciphertext of the norm of the discriminative characteristic vector, $Enc(\|\mathbf{y}\|^2, HE.pk)$.

9. The confidential data classification platform according to claim 8, **characterised in that** the classifier is further configured to compute, in the homomorphic domain, the Euclidean distances between the discriminative characteristic vector ($\mathbf{y}$) and the reference characteristic vectors ($\mathbf{y}_i^{ref}$, $i = 1,.., N$), from the encrypted norm of the discriminative characteristic vector, the encrypted norms of the reference characteristic vectors, and the respective scalar products between the discriminative characteristic vector and the reference characteristic vectors.

10. The confidential data classification platform according to claim 9, **characterised in that** the classifier compares said Euclidean distances in the homomorphic domain and returns to the user the index of the reference characteristic vector corresponding to the lowest Euclidean distance.

11. The confidential data classification platform according to claim 9, **characterised in that** the classifier returns to the user said Euclidean distances obtained in the homomorphic domain and the user derives therefrom by means of the private key of his/her homomorphic cryptosystem, respective probabilities that the input data vector corresponds to the reference data vectors.

12. A method for confidentially classifying data by means of an artificial neural network (110, 310) and a classifier (130, 330), wherein the artificial neural network is trained during a learning phase on data vectors of a learning base, and the artificial neural network or a copy thereof transforms, in an operational phase, input data vectors into discriminative characteristic vectors, said discriminative characteristic vectors being provided to the classifier (130) and having a size smaller than that of the data vectors, said method comprising:

- downloading, by the user of the platform, from the platform a copy (110') of the artificial neural network at the end of the learning phase;
- obtaining, by means of said copy of the neural network, during an initialisation phase of the classifier, the reference characteristic vectors from the reference data vectors, the user having a module for homomorphic encryption (140) by said public key, configured to encrypt in homomorphic said reference characteristic vectors;
- transmitting said reference characteristic vectors to the platform,
- during the initialisation phase of the classifier, storing in a reference base (120, 320) reference characteristic vectors, said reference characteristic vectors obtained by transforming, by means of the artificial neural network or said copy, reference data vectors, the reference characteristic vectors being stored in encrypted form by a public key of a homomorphic cryptosystem of said user; and after this initialisation phase,
- when the user requests the classification of an input data vector ($\mathbf{x}$) from the classification platform, a classification function ($f$) is evaluated by the classifier in the homomorphic domain, from the discriminative characteristic vector ($\mathbf{y}$) provided by the artificial neural network and the reference vectors stored in encrypted form in the reference base ($Enc\left(\mathbf{y}_i^{ref}, HE.pk\right)$, $i = 1, ..., N$), the result of said evaluation being transmitted to the user.

FIG. 1

Entrainement du réseau de neurones NN sur une base de données d'apprentissage —210

Construction par l'utilisateur du réseau neuronal local NN' —220

Calcul par NN' des vecteurs de caractéristiques de référence —230

Chiffrement en homomorphe des vecteurs de caractéristiques de référence (et de leurs normes) par l'utilisateur —240

Stockage des vecteurs de caractéristiques de référence (et de leurs normes) chiffrés dans la base de référence —250

Transformation par NN/NN' du vecteur de données d'entrée en un vecteur de caractéristiques discriminantes —260

Evaluation dans le domaine homomorphe de la fonction de classification —270

Transmission à l'utilisateur du résultat de l'évaluation —280

# FIG. 2

FIG. 3

Entrainement du réseau de neurones NN sur une base de données d'apprentissage — 410

Construction par la plateforme du réseau homomorphe NNH — 425

Chiffrement en homomorphe des vecteurs de données de référence par l'utilisateur et transmission à la plateforme — 435

Transformation par NNH des vecteurs de données de référence chiffrés en vecteurs de caractéristiques de référence chiffrés — 440

stockage des vecteurs de caractéristiques de référence (et de leurs normes) chiffrés dans la base de référence — 450

Transmission du vecteur de données d'entrée à la plateforme compression par NN en un vecteur de caractéristiques discriminantes — 460

Evaluation dans le domaine homomorphe de la fonction de classification — 470

Transmission à l'utilisateur du résultat de l'évaluation — 480

# FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **F. SCHROFF et al.** FaceNet a unified embedding for face recognition and clustering. *Proc. of IEEE CVPR*, 2015, 815-823
- **F. BOURSE et al.** Fast homomorphic evaluation of deep discretized neural networks. *CRYPTO*, 2018 (3), 483-512
- Practical and secure solutions for integer comparaison. **J. GARAY et al.** Public Key Cryptography - PKC. Springer, 2007, vol. 4450, 330-342
- Batch fully homomorphic encryption of the integers. **J-S. CORON et al.** Advances in Cryptology - EUROCRYPT 2013, Lecture Notes in Computer Science. Springer, vol. 7881
- **Z. BRAKERSKI et al.** Fully homomorphic encryption without bootstrapping. *Cryptology ePrint Archive*, 2011, vol. 277